# EUROPÄISCHE PATENTANMELDUNG

(11) **EP 0 538 731 A1**
(43) Veröffentlichungstag der Anmeldung: **28.04.1993**
(21) Anmeldenummer: 92117595.6
(22) Anmeldetag: 15.10.1992
(51) Int. Cl.: B64D 17/02

(54) **Gleitschirm**

(30) Priorität: 25.10.1991 DE 4135246
(71) Anmelder: Bauer, Karl, D-83666 Waakirchen (DE)
(72) Erfinder: Bauer, Karl, D-83666 Waakirchen (DE)

(57) **Zusammenfassung**

Um bei einem aus flexiblen Werkstoff gebildeten, im Flug mit Stauluft aufblähbaren Gleitschirm in Form eines Tragflügels eine deutliche Leistungssteigerung zu erziehlen, sind mindestens ein Teil der oberen Kammerbahnen (2) plastisch, räumlich verformt.

## Beschreibung

Die Erfindung betrifft aus flexiblem Werkstoff gebildeten Gleitschirm in Form eines Tragflügels, nach dem Oberbegriff des Anspruchs 1.

Gleitschirme dieser Art sind im allgemeinen steuerbar ausgebildet, z. B. mit Hilfe von Steuerleinen, durch die bestimmte Partien, gewöhnlich die hinteren Partien der Schirmfläche beeinflußt werden, und werden dafür eingesetzt, Personen von Bergen oder Flugzeugen in einer flachen Gleitbahn zu Boden zu bringen. Gleitschirmfliegen mit Schirmen dieser Art ist weltweit zu einem Massensport geworden.

Es sind Gleitschirmausbildungen bekannt (US-PS 4399 969), bei denen zur Erhöhung der Seitenstabilität an den äußersten seitlichen Tragflügel-Enden nach unten ragende Stoffgebilde, sogenannte Stabilisatoren befestigt sind.

Ferner sind Gleitschirme bekannt, bei denen die oberen und unteren Kammerbahnen aus einem Stück gefertigt sind, wobei die theoretische Trennung der oberen und unteren Kammerbahnen durch die Profilsehne erfolgt.

Weiterhin sind Gleitschirme bekannt, bei denen mehrere Stauluftkammern im Nasenbereich geschlossen oder mit Lufteinlaßventilen versehen, ausgebildet sind. Es befinden sich auch Gleitschirme im Einsatz deren obere Kammerbahnen aus mehreren Teilen zusammengesetzt sind.

Bei der heute üblichen Bauweise der Gleitschirme sind Profilbahnen zwischen im wesentlichen luftunduchlässigen, flexiblen, oberen und unteren Kammerbahnen befestigt. Die oberen Kammerbahnen bestehen aus eben, abwickelbaren Zuschnitten, deren Längsrichtung vorzugsweise in Profiltiefenrichtung verläuft Bedingt durch den Staudruck in den Stauluftkammern und dem Unterdruck auf der Oberseite des Gleitschirms wölben sich die oberen Kammerbahnen zwischen den Profilbahnen nach oben aus. Neuere Gleitschirme besitzen oft eine grob Anzahl von Profilbahnen, dadurch wird eine sehr gute Konturgenauigkeit und eine Verringerung der Faltenbildung erreicht,Auf Grund der Durchwölbung und der Profilkrümmung entstehen jedoch weiterhin Falten und Wellen auf den oberen Kammerbahnen. Diese Falten und Wellen stören den Strömungsverlauf der Luft und bewirken eine erhebliche Leistungsminderung. Zur Verbesserung der Leistung eines Gleitschirms ist es aus dem DE-GM G 90 15 289.1 bekannt, die oberen Kammerbahnen im vorderen Bereich mit zusätzlichen Glättbahnen abzudecken. Diese Maßnahme bedingt aber einen erhöhten Herstellungsaufwand und ein größeres Gewicht des Gleitschirms.

Aufgabe der Erfindung ist es, den geschilderten Stand der Technik derart zu verbesssern, daß die Wellen und Falten beseitigt werden und dadurch eine merkliche Leistungssteigerung erzielt wird, ohne daß die Sicherheit darunter leidet.

Diese Aufgabe wird erfindungsgemäß bei einem Gleitschirm der eingangs genannten Art durch die kennzeichnenden Merkmale des Patentanspruchs 1 in der Weise gelöst, daß mindestens ein Teil der oberen Kammerbahnen plastisch, räumlich verformt sind. Die verformten oberen Kammerbahnen sind somit nicht mehr eben abwickelbar. Die bleibende räumliche, d. h. in mehreren Ebenen gekrümmte Verformung entspricht im wesentlichen der späteren Formgebung durch die Luftkräfte. Durch diese verformten Kammerbahnen entstehen deutlich weniger Falten bzw. Wellen und die Flugleistung erhöht sich, ohne daß die Sicherheit darunter leidet. Besonders im vorderen Profilbereich ist es vorteilhaft, wenn die oberen Kammerbahnen plastisch, räumlich verformt sind.

In weiterer vorteilhafter Ausgestaltung der Erfindung ist es zweckmäßig gemäß Anspruch 2, daß die oberen Kammerbahnen an den längsgerichteten Randbereichen mit Hilfe von Wärme geschrumpft sind und somit eine räumliche Form aufweisen.

Von Vorteil wären auch gemäß Anspruch 3, obere Kammerbahnen mit gereckten, längsgerichteten Innenbereichen, die sich räumlich, faltenfrei nach oben durchwölben.

Die mit der Erfindung erziehlten Vorteile bestehen insbesondere darin, daß eine merkliche Leistungssteigerung erziehlt wird, ohne daß die Sicherheit darunter leidet. Außerdem werden keine starten Teile verwendet und weder Packvolumen noch Gewicht des Gleitschirms ändern sich.

Die Erfindung wird nunmehr anhand der in den Zeichnungen dargestellten Ausführungsbeispielen näher beschrieben:

Es zeigen in schematischer Darstellung:
- Fig. 1: einen Gleitschirm in perspektivischer Ansicht;
- Fig. 2: perspektivische Ansicht einer geschrumpften oberen Kammerbahn;

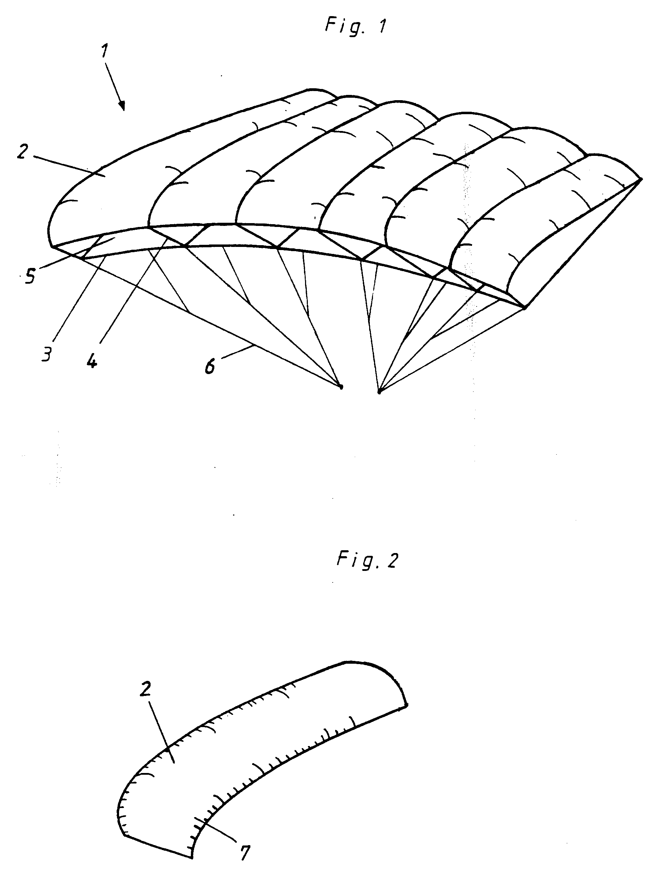

Der in Fig. 1 gezeigte insgesamt mit 1 bezeichnete Gleitschirm entspricht prinzipiell der heute üblichen Bauweise, mit oberen und unteren Kammerbahnen 2 bzw. 3 zwischen denen sich von der Vorder- zur Hinterkante vertikal gerichtete Profilbahnen 4 erstrecken die mit den Kammerbahnen 2,3 vernäht sind.

Die Profilbahnen 4 bilden in Verbindung mit den oberen und unteren Kammerbahnen 2,3 Stauluftkammern 5, die in ihrem vorderen Bereich Staulufteinlässe bestitzen.

Die oberen und unteren Kammerbahnen 2,3 werden durch die in die Stauluftkammern 5 eingeleitete Luftströmung auseinander gedrückt, wobei die Profilbahnen 4 im wesentlichen die Profilform des Gleitschirmes 1 bestimmen.

Mit dem Gleitschirm 1 sind Tragleinen 6 verbunden, die an einem Tragegeschirr zur Aufnahme von Personen befestigt sind.
Die zwischen den Profilbahnen 4 nach oben durchgewölbten Kammerbahnen 2 sind plastisch, räumlich, verformt und bilden eine in Strömungsrichtung glatte Oberfläche.

Die in Fig. 2 gezeigte obere Kammerbahn 2 ist an den längsgerichteten Randbereichen 7 geschrumpft und somit plastisch verformt.

## Patentansprüche

1. Aus flexiblem Werkstoff gebildeter Gleitschirm in Form eines Tragflügels, mit oberen und unteren Kammerbahnen, zwischen diesen befestigten Profilbahnen, die jeweils von der anströmenden Luft aufblähbare Stauluftkammern begrenzen, mit mindestens einem Staulufteilaß im vorderen Bereich des Tragflügels, dadurch **gekennzeichnet,** daß mindestens ein Teil der oberen Kammerbahnen (2) plastisch, räumlich verformt sind

2. Gleichschirm nach Anspruch 1,
dadurch **gekennzeichnet,** daß
obere Kammerbahnen (2) an den längsgerichteten Randbereichen (7) geschrumpft sind

3. Gleichschirm nach einem der vorhergehenden Ansprüche,
dadurch **gekennzeichnet,** daß
obere Kammerbahnen (2) im längsgerichteten Innenbereich gereckt sind.
